# EUROPEAN PATENT APPLICATION

(11) **EP 2 107 510 A1**
(43) Date of publication of application: **07.10.2009**
(21) Application number: 09002759.0
(22) Date of filing: 26.02.2009
(51) Int. Cl.: G06K 17/00

(54) **Method and apparatus for issuing wireless IC tag**

(30) Priority: 04.04.2008 JP 2008098621
(71) Applicant: Toshiba TEC Kabushiki Kaisha, Tokyo 141-8664 (JP)
(72) Inventor: Yamada, Kuniyoshi, Tokyo 141-8664 (JP); Tamura, Toshiyuki, Tokyo 141-8664 (JP); Hiyoshi, Takayuki, Tokyo 141-8664 (JP)
(74) Representative: Kramer - Barske - Schmidtchen

(57) **Abstract**

A wireless IC tag issuing apparatus (1) includes a first antenna (12) and a second antenna (14) to perform radio communication with wireless IC tags (22) sequentially conveyed by conveying means (8). The second antenna (14) is arranged on a downstream side of the first antenna (12) in a conveying direction of the wireless IC tag (22). An interval dl between the first antenna (12) and the second antenna (14) in a conveying direction of the wireless IC tag is made smaller than a distance d2 between inlets (25) of the subsequent wireless IC tags (22). A control unit (2) checks whether data is normally written to the wireless IC tag (22) on the basis of data written to the wireless IC tag (22) through the first antenna (12) and data read from the wireless IC tag (22) through the second antenna (14).

## Description

The present invention relates to a method and an apparatus which issue a wireless IC tag used in the fields of merchandise management, distribution management, and the like.

In recent years, in the field of merchandise management or distribution management, the introduction of an individual recognition system using a radiofrequency identification (RFID) technique is examined. In this system, wireless IC tags called an RFID label, an RFID card, or the like are attached to individual pieces (articles such as merchandise), respectively. A reader/writer which can wirelessly communicate with the wireless IC tag is connected to a host apparatus. The reader/writer wirelessly communicates with the wireless IC tag attached to each of the individual pieces to specify the wireless IC tag. The host apparatus identifies the individual piece to which the wireless IC tag specified by the reader/writer is attached.

A wireless IC tag for individual recognition generally has a structure in which a wireless communication circuit is embedded in a label body or a card body. The wireless communication circuit is called an inlet and includes an IC chip and an antenna. For example, when an RFID label is used, an inlet is sandwiched between a sheet to be printed and released paper. A nonvolatile memory is mounted in the IC chip.

The memory stores information or the like to specify the wireless IC tag. The information stored in the memory is electronic information. For this reason, a user of the wireless IC tag cannot visually check the information in the memory. Therefore, in the wireless IC tag for individual recognition, information in the memory or information which can recognize the information in the memory is generally printed on the surface of a label or a card. In this manner, the user can easily recognize information in the memory.

A wireless IC tag issuing apparatus which issues a wireless IC tag for individual recognition is already in practical use. The apparatus includes conveying means for sequentially conveying a plurality of wireless IC tags. The apparatus wirelessly communicates with a wireless IC tag conveyed by the conveying means to write necessary information to a memory of the wireless IC tag. The apparatus operates a printer to print the necessary information on the surface of the wireless IC tag.

For example, Jpn. Pat. Appln. KOKAI Publication No. 2003-132330 or 2006-040023 discloses a wireless IC tag issuing apparatus in which a plurality of antennas are arranged on conveying paths for a wireless IC tag. In the apparatus, an information writing antenna is arranged on an upstream side in a conveying direction of a wireless IC tag, and an information reading antenna is arranged on a downstream side. The information writing antenna writes information to the wireless IC tag. The information reading antenna reads the information written to the wireless IC tag. The apparatus determines whether the information written to the wireless IC tag can be correctly read.

However, before the information of the wireless IC tag is read by the information reading antenna to perform determination, the apparatus writes necessary information to the subsequent wireless IC tag by the information writing antenna. For this reason, when an information write error to the wireless IC tag is detected, the apparatus writes another piece of information to the subsequent wireless IC tag in advance. Therefore, the apparatus cannot issue a wireless IC tag, in which information to be written to the wireless IC tag having the write error is recorded, subsequently to the wireless IC tag in which the error occurs.

It is an object of the present invention to provide an issuing apparatus and an issuing method which, when an information write error occurs in a wireless IC tag, can issue a wireless IC tag, on which information to be written to the former wireless IC tag is recorded, subsequently to the wireless tag having the error.

According to one aspect of the present invention, a wireless IC tag issuing apparatus including conveying means configured to sequentially convey a plurality of wireless IC tags each having an inlet including an IC chip and an antenna includes a first antenna and a second antenna as antennas to perform radio communication with the wireless IC tag. The second antenna is arranged on a downstream side in a conveying direction of the wireless IC tag with respect to the first antenna. An interval between the first antenna and the second antenna in the wireless IC tag conveying direction is made smaller than a distance between the inlets of sequential wireless IC tags. A control unit checks whether data is normally written to the wireless IC tag on the basis of the data written to the wireless IC tag through the first antenna and data read from the wireless IC tag through the second antenna.

The invention can be more fully understood from the following detailed description when taken in conjunction with the accompanying drawings, in which:
FIG. 1 is a schematic diagram of a label issuing apparatus according to a first embodiment of the present invention;
FIG. 2 is a diagram showing positional relationships between a wireless IC tag stuck to a label sheet, first and second antennas, and a print head which are used in the first embodiment;
FIG. 3 is a flow chart showing procedures of a label issuing process executed by a control unit in the first embodiment;
FIG. 4 is a diagram showing positional relationships between wireless IC tags, the first and second antennas, and the print head when an inlet of one wireless IC tag is positioned directly in front of a communication position of the first antenna;
FIG. 5 is a diagram showing positional relationships between wireless IC tags, the first and second antennas, and the print head immediately before a distal end of one wireless IC tag reaches a print position of the print head in a back-feed state of a label sheet;
FIG. 6 is a diagram showing positional relationships between wireless IC tags, the first and second antennas, and the print head when an inlet of one wireless IC tag is positioned at a communication position of the second antenna;
FIG. 7 is a diagram showing issue of an error label and a normal RFID label;
FIG. 8 is a schematic diagram of a label issuing apparatus according to a second embodiment of the present invention;
FIG. 9 is a flow chart showing procedures of a label issuing process executed by a control unit in the second embodiment;
FIG. 10 is a schematic diagram of a label issuing apparatus according to a third embodiment of the present invention; and
FIG. 11 is a diagram showing positional relationships between wireless IC tags, first and second antennas, and a print head according to the third embodiment.

Hereinafter, an optimum embodiment in order to implement the invention will be described with reference to the drawings.

In the embodiment, the present invention is applied to a wireless IC tag issuing apparatus to issue an RFID label.

### (First Embodiment)

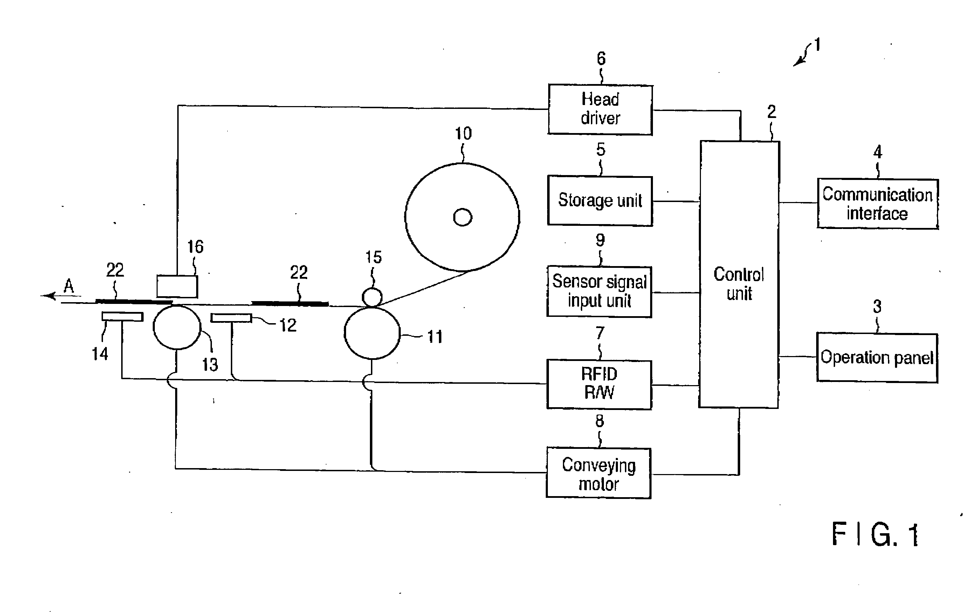

A first embodiment will be described below with reference to FIGS. 1 to 7. The configuration of a wireless IC tag issuing apparatus 1 according to the embodiment is shown in the schematic diagram in FIG. 1.

As shown in FIG. 1, the wireless IC tag issuing apparatus 1 includes a control unit 2, an operation panel 3, a communication interface 4, a storage unit 5, a head driver 6, an RFID reader/writer 7, a conveying motor 8, and a sensor signal input unit 9. Although not shown, the wireless IC tag issuing apparatus 1 includes a holder to hold a label sheet 10 wound in the form of a roll.

In the issuing apparatus 1, along a conveying path of the label sheet 10 drawn from the holder, a conveying roller 11, a first antenna 12, a platen roller 13, and a second antenna 14 are sequentially arranged from the upstream side which is a holder side.

The issuing apparatus 1 is arranged such that a guide roller 15 faces the conveying roller 11. The issuing apparatus 1 is arranged such that a print head 16 faces the platen roller 13.

The label sheet 10 drawn from the holder passes through a portion between the conveying roller 11 and the guide roller 15. The label sheet 10 then passes through a portion near the first antenna 12. The label sheet 10 passes through a portion between the platen roller 13 and the print head 16. Finally, the label sheet 10 is discharged out of the apparatus through a portion near the second antenna 14.

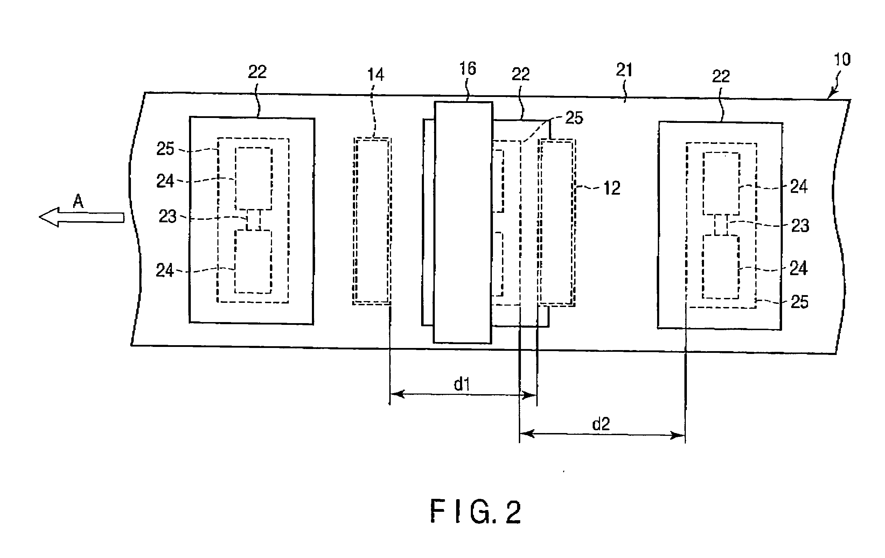

As shown in FIG. 2, the label sheet 10 has a belt-like board 21. To the surface of the board 21, a large number of wireless IC tags 22 are aligned in a longitudinal direction of the board 21 and releasably stuck. The wireless IC tag 22 has an inlet 25 including an IC chip 23 and an antenna 24. The inlet 25 is sandwiched between a sheet constituting a front surface of the wireless IC tag 22 and a sheet constituting the rear surface. The sheet constituting the rear surface has an adhesive surface, and the sheet constituting the front surface has a print surface.

The print head 16 prints visible information on the print surface serving as the front surface of the wireless IC tag 22 in response to a signal from the head driver 6. For example, a thermal head is used as the print head 16. An ink ribbon may be interposed between the print head 16 and the label sheet 10.

In this place, the print head 16 constitutes printing means which is arranged between the first antenna 12 and the second antenna 14 and prints visible information on the front surface of the wireless IC tag 22.

The conveying roller 11 and the platen roller 13 are rotationally driven by the motive energy of the conveying motor 8. The conveying roller 11 and the platen roller 13 are freely rotated forward or backward by switching gears. When both the conveying roller 11 and the platen roller 13 are rotated forward, the label sheet 10 is conveyed in a direction of an arrow A in FIG. 1.

When the label sheet 10 is conveyed in the direction of arrow A in FIG. 1, each of the wireless IC tags 22 on the label sheet 10, as shown in FIG. 2, passes through an upper portion of the first antenna 12 first. The wireless IC tag 22 passes through a portion between the platen roller 13 and the print head 16 and then passes through an upper portion of the second antenna 14.

When both the conveying roller 11 and the platen roller 13 are rotated backward, the label sheet 10 is conveyed in a direction opposing the direction of arrow A. At this time, the roll label sheet wound on the holder does not rotate. As a result, the label sheet 10 is bent between the conveying roller 11 and the holder.

The conveying motor 8 constitutes conveying means which sequentially conveys the plurality of wireless IC tags 22 each having the inlet 25 constituted by the IC chip 23 and the antenna 24.

The first antenna 12 and the second antenna 14 are connected to the RFID reader/writer 7. The first antenna 12 has radio-emitting characteristics set such as a radio field intensity and a directivity which are set such that a radio wave emitted from the first antenna 12 is received by the antenna 24 of the wireless IC tag 22 passing right over the antenna 12. The second antenna 14 has radio-emitting characteristics set such that a radio wave emitted from the second antenna 14 is received by the antenna 24 of the wireless IC tag 22 passing right over the antenna 14. As the antennas 12 and 14, dipole antennas and patch antennas can be used. Depending on a shape of the wireless IC tag issuing apparatus 1, a type of the inlet 25 of the wireless IC tag 22 to be used, and the like, the antennas 12 and 14 can be arbitrarily selected.

The RFID reader/writer 7 modulates a carrier wave with write data to the wireless IC tag 22 and causes the first antenna 12 to emit the modulated wave as a radio wave. With this radio communication, the RFID reader/writer 7 writes data to the wireless IC tag 22 passing right over the first antenna 12 in a contactless manner.

The RFID reader/writer 7 demodulates a signal received from the wireless IC tag 22 by the second antenna 14. With the demodulated signal, the RFID reader/writer 7 reads data from the wireless IC tag 22 passing right over the second antenna 14 in a contactless manner.

In this manner, the first antenna 12 functions as an information writing antenna. The second antenna 14 functions as an information reading antenna.

The first antenna 12 and the second antenna 14 are arranged on the upstream and downstream sides in the conveying direction of the label sheet 10 to interpose the platen roller 13. An interval d1 between the first antenna 12 and the second antenna 14 is designed to be smaller than a distance d2 between the inlets 25 of the subsequent wireless IC tags 22 stuck to the label sheet 10 at equal intervals.

Although not shown, a plurality of sensors are arranged on the conveying path of the label sheet 10. The sensors detect front ends or rear ends of the wireless IC tags 22 sequentially conveyed together with the label sheet 10. Signals detected by the sensors are input to the control unit 2 through the sensor signal input unit 9.

The control unit 2 is mainly configured by a central processing unit (CPU). The operation panel 3 includes an input/output device such as a keyboard and a display. A host apparatus to generate label data is connected to the communication interface 4.

The label data includes individual recognition information written to the memory of the wireless IC tag 22 and visible information printed on the print surface of the wireless IC tag 22. The individual recognition information and the visible information have a one-to-one relationship. The label data (individual recognition information and visible information) generated by the host apparatus is received by the control unit 2 through the communication interface 4 and sequentially stored in the storage unit 5.

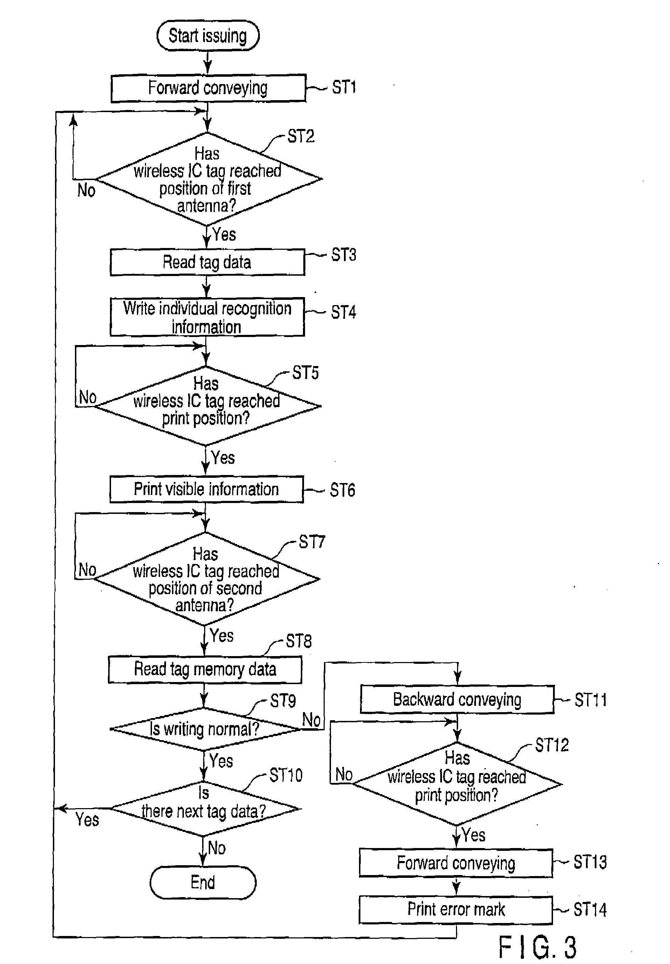

In the state that the plurality of label data are stored in the storage unit 5, when an issue command of an RFID label is given, the control unit 2 controls the units according to procedures shown in the flow chart in FIG. 3. The control procedures are realized by a program stored in the storage unit 5 in advance. The issue command is given by an operation input of the operation panel 3 or a command input from the host apparatus.

The control unit 2 controls the conveying motor 8 to convey the label sheet 10 in a forward direction (direction of arrow A in FIG. 1) in step ST1. The control unit 2 waits until the inlet 25 of any one of the wireless IC tags 22 reaches a communication position (first antenna position) immediately above the first antenna 12 in step ST2. The control unit 2 determines whether the inlet 25 reaches the communication position of the first antenna 12 by a sensor signal input through the sensor signal input unit 9.

When the inlet 25 reaches the communication position of the first antenna 12, the control unit 2 reads one of tag data stored in the storage unit 5 in a storage order in step ST3. Each time the tag data is read, the control unit 2 transmits individual recognition information of the tag data to the RFID reader/writer 7 in step ST4. The RFID reader/writer 7 writes the individual recognition information to the memory of the inlet 25 reaching the communication position of the first antenna 12 by using radio communication.

The control unit 2 waits until the front end of the wireless IC tag 22 to which the individual recognition information is written reaches a print position (printer position) by the print head 16 in step ST5. The control unit 2 determines whether the front end of the wireless IC tag 22 reaches the print position by a sensor signal input through the sensor signal input unit 9.

When the front end of the wireless IC tag 22 reaches the print position, the control unit 2 transmits visible information of tag data corresponding to the individual recognition information to the head driver 6 in step ST6. The head driver 6 drives the print head 16. The print head 16 prints the visible information on a print surface serving as the front surface of the wireless IC tag 22.

The control unit 2 waits until the inlet 25 of the wireless IC tag 22 on which the visible information is printed reaches a communication position (second antenna position) immediately above the second antenna 14 in step ST7. The control unit 2 determines whether the inlet 25 reaches the communication position of the second antenna 14 by the sensor signal input through the sensor signal input unit 9.

When the inlet 25 reaches the communication position of the second antenna 14, the control unit 2 outputs an inquiry command of the tag memory data to the RFID reader/writer 7 in step ST8. The RFID reader/writer 7 reads the data stored in the memory of the inlet 25 reaching the communication position of the second antenna 14 by using radio communication. The read data is input to the control unit 2 through the RFID reader/writer 7.

The control unit 2 determines whether data is normally written to the wireless IC tag 22 in step ST9. More specifically, the control unit 2 collates the tag memory data read from the wireless IC tag 22 with the individual recognition information of the tag data read from the storage unit 5 by the process in step ST3 to determine whether the tag memory data is matched with the individual recognition information.

When the data is normally written to the wireless IC tag 22 in the process in step ST4, both the data are matched with each other. When the data are matched with each other, the control unit 2 determines that the data is normally written. When the data is not normally written to the wireless IC tag 22, both the data are not matched with each other. When the data are not matched with each other, the control unit 2 determines a write error.

When it is determined that the data is normally written, the control unit 2 determines whether the next tag data is stored in the storage unit 5 in step ST10. When the next tag data is stored, the control unit 2 returns to step ST2. The control unit 2 waits until the inlet 25 of any one of the wireless IC tags 22 reaches a communication position immediately above the first antenna 12. When the inlet 25 reaches the communication position of the first antenna 12, the processes in the steps subsequent to step ST3 are executed again.

When the control unit 2 determines the write error, the control unit controls the conveying motor 8 to convey the label sheet 10 in the backward direction (direction opposing arrow A in FIG. 1) in step ST11. The control unit 2 waits until the front end of the wireless IC tag 22 located above the second antenna 14 reaches the print position (printer position) by the print head 16 in step ST12. The control unit 2 determines whether the front end of the wireless IC tag 22 reaches the print position by a sensor input through the sensor signal input unit 9.

When the front end of the wireless IC tag 22 reaches the print position, the control unit 2 controls the conveying motor 8 to convey the label sheet 10 in the forward direction again in step ST13. The control unit 2 outputs print data representing a predetermined error mark to the head driver 6 in step ST14. The head driver 6 drives the print head 16. The print head 16 prints an error mark on the print surface of the wireless IC tag 22.

The control unit 2 returns to the process in step ST2. More specifically, the control unit 2 waits until the inlet 25 of any one of the wireless IC tags 22 reaches a communication position immediately above the first antenna 12. When the control unit 2 determines that the inlet 25 of the wireless IC tag 22 reaches the communication position of the first antenna 12, the processes in the steps subsequent to step ST3 are executed again.

The control unit 2 checks whether data is normally written to the wireless IC tag 22 by the procedures in step ST1 to step ST10. When the data is normally written, the control unit 2 issues the wireless IC tag 22.

When the wireless IC tag 22 is an error tag to which data is not normally written by the procedures in step ST11 to step ST14, the control unit 2 prints a predetermined error mark to issue the wireless IC tag 22.

The control unit 2 writes the same data as the data written in the error tag in a wireless IC tag 22 subsequent to the error tag by the procedures returning from step ST13 and step ST14 to step ST2.

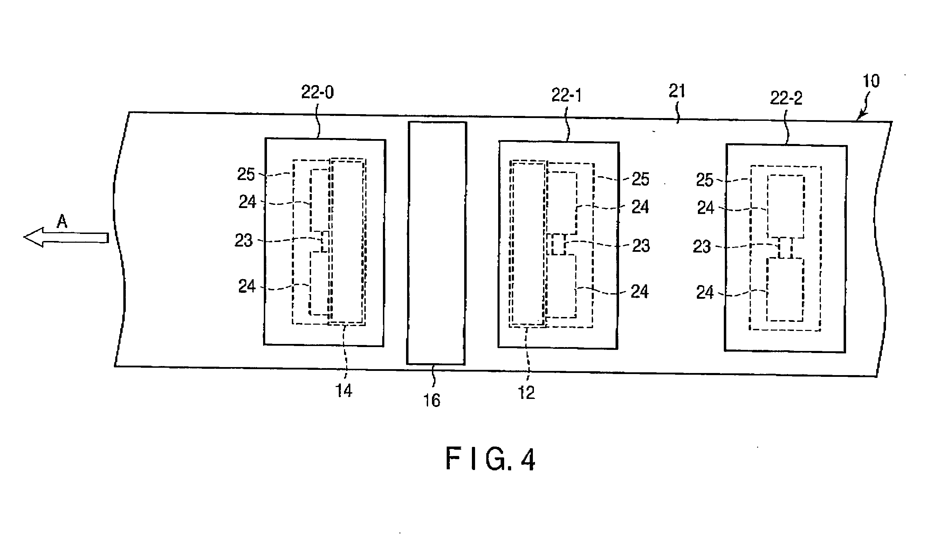

In the wireless IC tag issuing apparatus according to the embodiment, positional relationships between wireless tags 22-0 to 22-2 and the first and second antennas 12 and 14 and the print head 16 obtained when the inlet 25 of wireless tag 22-1 is located before the communication position immediately above the first antenna 12 are shown in FIG. 4.

In FIG. 4, the issuing apparatus 1 conveys the label sheet 10 in a direction of an arrow A in FIG. 4. When the inlet 25 of wireless IC tag 22-1 reaches the communication position of the first antenna 12, the first antenna 12 performs radio communication between the inlet 25 and the antenna 24. By the radio communication, the issuing apparatus 1 writes individual recognition information of tag data to a memory mounted on the IC chip 23 of the inlet 25 in a contactless manner.

When the front end of wireless IC tag 22-1 reaches the print position by the print head 16, the print head 16 operates. The print head 16 prints visible information of the tag data on a print surface serving as a front surface of wireless IC tag 22-1.

When the inlet 25 of wireless IC tag 22-1 reaches the communication position immediately above the second antenna 14, the second antenna 14 performs radio communication with the antenna 24 of the inlet 25. By the radio communication, the issuing apparatus 1 reads the data written to the memory mounted on the IC chip 23 of the inlet 25 in a contactless manner.

When the data of wireless IC tag 22-1 is read by the second antenna 14, the issuing apparatus 1 determines whether the data is normally written to wireless IC tag 22-1.

When the data is normally written, the issuing apparatus 1 further conveys the label sheet 10 in the direction of arrow A. As a result, wireless IC tag 22-1 is issued as an RFID label. Individual recognition information of the label data is written to the memory of wireless IC tag 22-1. Visible information related to the label data is printed on the print surface of wireless IC tag 22-1.

When the data is not normally written to wireless IC tag 22-1, the issuing apparatus 1 conveys the label sheet 10 in the direction opposing the direction of arrow A. When the front end of wireless IC tag 22-1 returns to the print position by the print head 16, the issuing apparatus 1 conveys the label sheet 10 again in the direction of arrow A. At this time, the print head 16 prints a predetermined error mark on a print surface serving as a front surface of wireless IC tag 22-1.

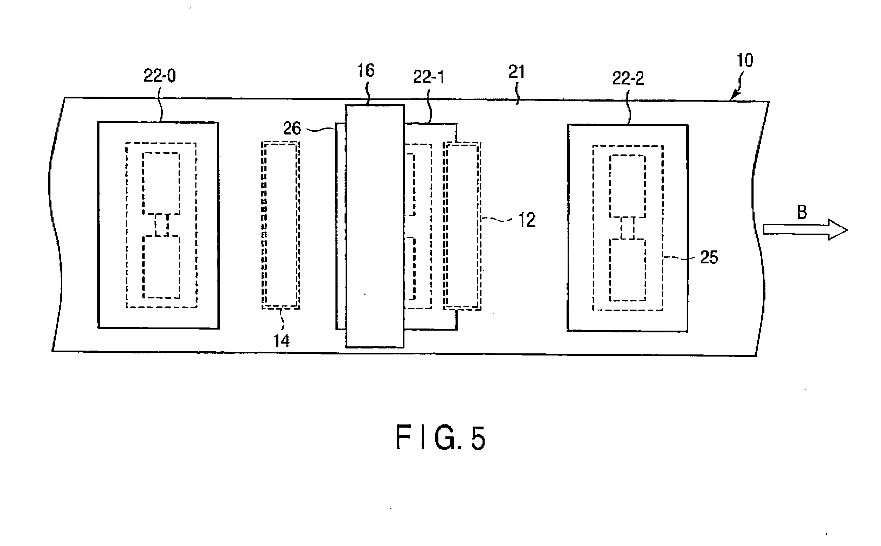

FIG. 5 shows positional relationships between wireless IC tags 22-0 to 22-2 and the first and second antennas 12 and 14 and the print head 16 obtained immediately before a front end 26 of wireless IC tag 22-1 returns to the print position.

In the state in FIG. 5, the label sheet 10 is further conveyed in a direction of an arrow B in FIG. 5, and the front end 26 of wireless IC tag 22-1 returns to the print position by the print head 16. When the front end 26 of wireless IC tag 22-1 returns to the print position, the label sheet 10 is conveyed in a direction opposing the direction of arrow B. Then, a predetermined error mark is printed on the print surface of wireless IC tag 22-1.

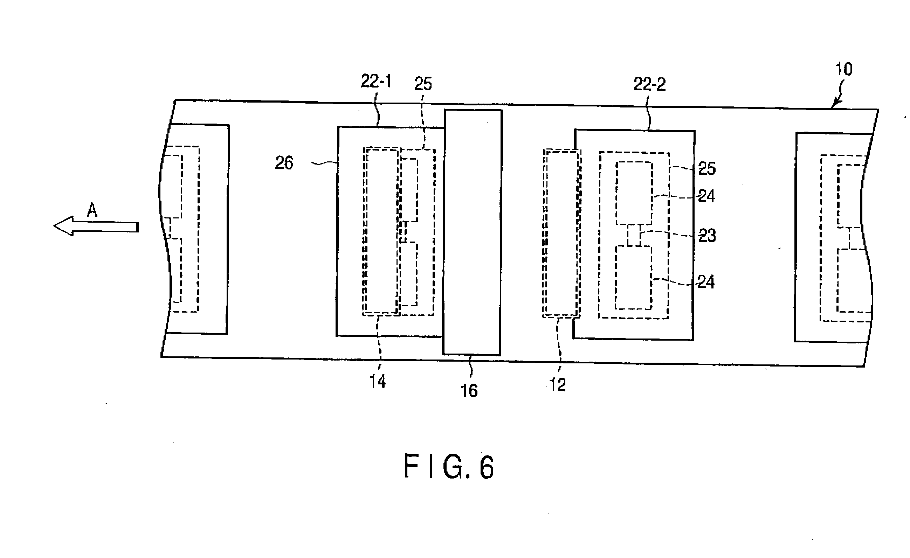

In the embodiment, an interval d1 between the first antenna 12 and the second antenna 14 is smaller than a distance d2 between the inlets 25 of the subsequent wireless IC tags 22 stuck to the label sheet 10 at equal intervals. For this reason, as shown in FIG. 6, when the inlet 25 of wireless IC tag 22-1 reaches the communication position of the second antenna 14, the inlet 25 of wireless IC tag 22-2 conveyed subsequently to wireless IC tag 22-1 does not reach the communication position of the first antenna 12. Therefore, the individual recognition information of the next tag data is not yet written to wireless IC tag 22-2.

In the state shown in FIG. 6, when the write error of wireless IC tag 22-1 is detected, the label sheet 10 is conveyed in a direction opposing the direction of arrow A. When the front end 26 of wireless IC tag 22-1 returns to the print position of the print head 16, the label sheet 10 is conveyed in the direction of arrow A again, and a predetermined error mark is printed on a print surface. Thereafter, wireless IC tag 22-1 passes through the communication position of the second antenna 14 and is issued as an error label.

By the time the error label is issued, the inlet 25 of wireless IC tag 22-2 conveyed subsequently to wireless IC tag 22-1 reaches the communication position of the first antenna 12. When the inlet 25 of wireless IC tag 22-2 reaches the communication position of the first antenna 12, radio communication is performed between the first antenna 12 and the antenna 24 of the inlet 25. At this time, individual recognition information to be written to wireless IC tag 22-1 is written to a memory mounted on the IC chip 23 of the inlet 25 of wireless IC tag 22-2 subsequent to wireless IC tag 22-1 in a contactless manner.

Thereafter, when the front end of wireless IC tag 22-2 reaches the print position by the print head 16, the print head 16 operates. The same visible information as the information printed on wireless IC tag 22-1 is printed on the print surface serving as the surface of wireless IC tag 22-2.

Furthermore, when the inlet 25 of wireless IC tag 22-2 reaches the communication position immediately above the second antenna 14, the second antenna 14 reads the data written to the memory mounted on the IC chip 23 of the inlet 25. The control unit 2 determines whether the data is normally written to wireless IC tag 22-2. When the data is normally written, the issuing apparatus 1 further conveys the label sheet 10 in the direction of arrow A. As a result, wireless IC tag 22-2 is issued as an RFID label.

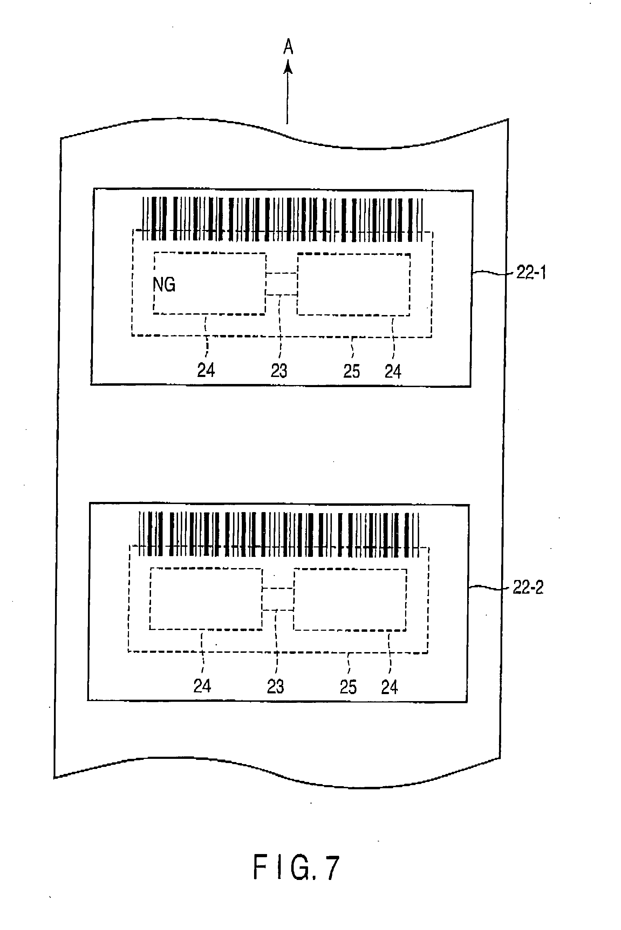

FIG. 7 shows an example in which wireless IC tag 22-1 is issued as an error label and the subsequent wireless IC tag 22-2 is issued as the RFID label. As shown in FIG. 7, subsequently to wireless IC tag 22-1 serving as the error label, wireless IC tag 22-2 is issued. Wireless IC tag 22-2 is an RFID label on which individual recognition information and visible information (barcode) to be written to wireless IC tag 22-1 serving as the error label are written.

A predetermined error mark "NG" is printed on wireless IC tag 22-1 serving as the error label. Therefore, a user of the wireless IC tag issuing apparatus 1 can easily recognize that wireless IC tag 22-1 issued first is an error label and that the subsequently issued wireless IC tag 22-2 is a normal RFID label.

For example, it is now assumed that label data D1, D2, and D3 are given to the wireless IC tag issuing apparatus 1 in the order named. In this case, if all the label data are normally written to the wireless IC tag 22, the label data D1 is written to wireless IC tag 22-1 issued first. The label data D2 is written to wireless IC tag 22-2 issued secondarily. The label data D3 is written to a wireless IC tag 22-3 issued thirdly. More specifically, wireless IC tags on which the label data D1, D2, and D3 are recorded in the order named are issued.

In this case, for example, when a write error occurs to wireless IC tag 22-2 issued secondarily, the label data D2 is written to wireless IC tag 22-3 issued thirdly. The label data D3 is written to a wireless IC tag 22-4 issued fourth. Therefore, the wireless IC tags on which the label data D1, D2, and D3 are written in the same order as the normal order are issued except for wireless IC tag 22-2 on which the error mark is printed.

### (Second Embodiment)

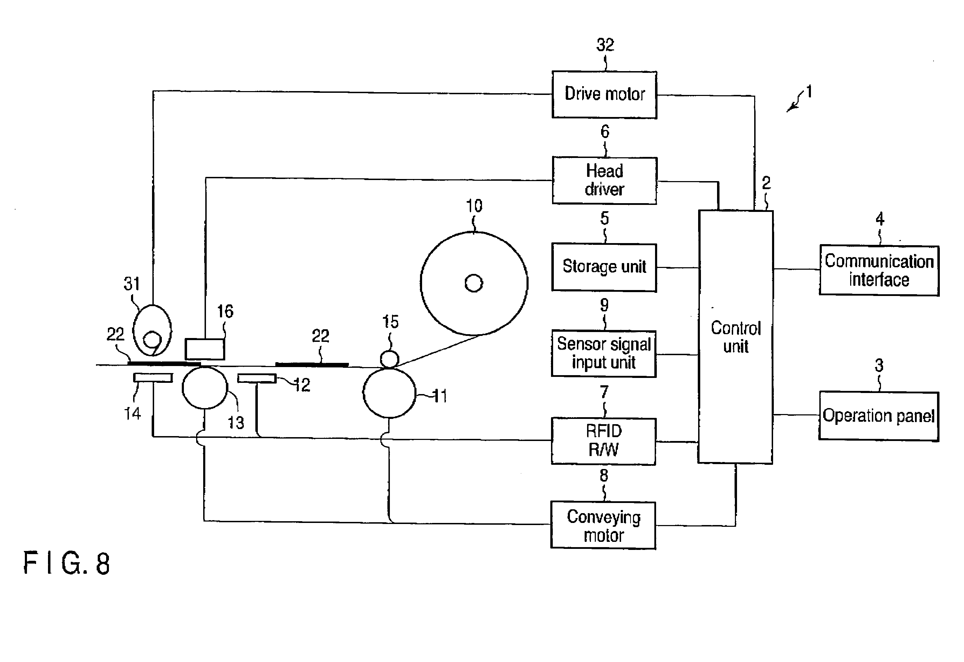

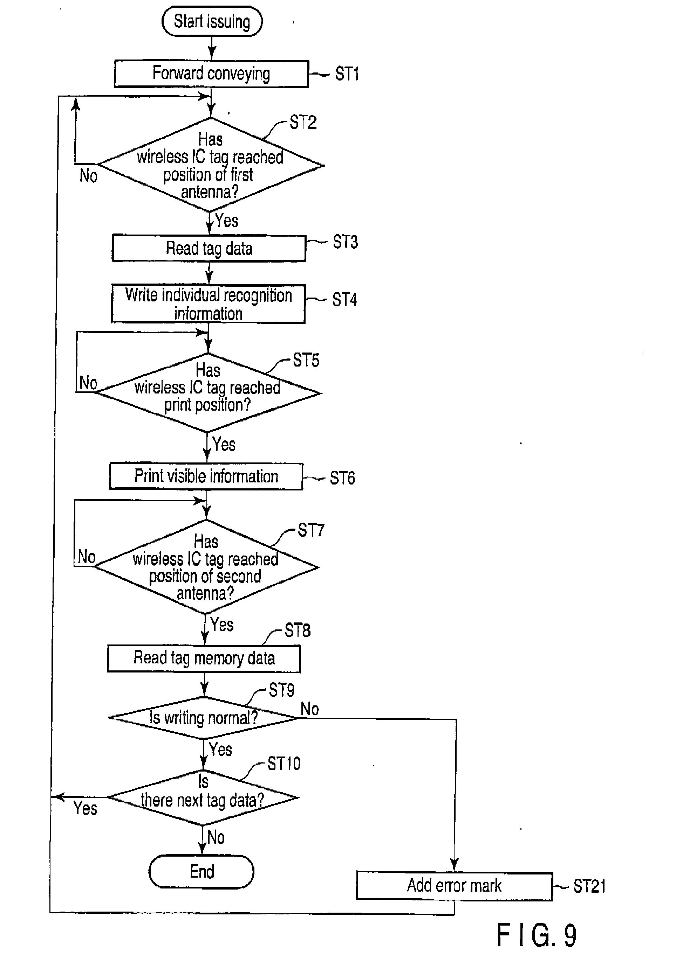

A second embodiment will be described below with reference to FIGS. 8 and 9. The configuration of the wireless IC tag issuing apparatus 1 according to the second embodiment is shown by a schematic diagram in FIG. 8. The same reference numbers as in FIG. 1 of the first embodiment denote the same parts in the second embodiment, and a description thereof will be briefly described.

Difference between the second embodiment and the first embodiment includes the following points. That is, mark adding means 31 is arranged facing the second antenna 14, and the drive motor 32 which drives the mark adding means 31 is arranged such that the drive motor 32 can be controlled by the control unit 2.

The mark adding means 31 sticks a seal to a surface of the wireless IC tag 22 by motive energy of the drive motor 32. On the seal, a predetermined error mark (for example, "NG") is recorded. The wireless IC tag 22 to which the seal is stuck is a tag which communicates with the second antenna 14 and which is determined as a write error.

The mark adding means 31 is not limited to a mechanism which sticks a seal. For example, a mechanism which prints an error mark may be used. Alternatively, a function which stamps an error mark may be used.

In the second embodiment, when the control unit 2 receives an issue command of an RFID label, the control unit 2 controls the units according to the procedures shown in a flow chart in FIG. 9. The issue command is given by an operation input of the operation panel 3 or a command input from a host apparatus. In FIG. 9, the same reference numbers as in FIG. 3 of the first embodiment denote the same parts in FIG. 9, and a detailed description thereof will be omitted.

As is apparent from comparison between FIG. 3 and FIG. 9, the second embodiment is different from the first embodiment in the procedures performed after a write error is determined in the process in step ST9.

When the control unit 2 determines the write error, the control unit 2 controls the drive motor 32 to operate the mark adding means 31. The mark adding means 31 adds a predetermined error mark to the surface of the wireless IC tag 22 determined as a write error.

Thereafter, the control unit 2 returns to the process in step ST2. More specifically, the control unit 2 waits until the inlet 25 of any one of the wireless IC tags 22 reaches a communication position immediately above the first antenna 12. When the inlet 25 of the wireless IC tag 22 reaches the communication position of the first antenna 12, the control unit 2 executes the processes in the steps subsequent to step ST3 again.

Also in the second embodiment, an interval d1 between the first antenna 12 and the second antenna 14 is smaller than a distance d2 between the inlets 25 of the subsequent wireless IC tags 22 stuck to the label sheet 10 at equal intervals. For this reason, when the inlet 25 of the wireless IC tag 22 reaches the communication position of the second antenna 14, the inlet 25 of the wireless IC tag 22 conveyed subsequently to the wireless IC tag 22 does not reach the communication position of the first antenna 12. Therefore, the individual recognition information of the tag data is not yet written to the subsequent wireless IC tag 22.

In this stage, when a write error is determined to the previous wireless IC tag 22, the mark adding means 31 operates to add an error mark to a surface of the wireless IC tag 22, and the wireless IC tag 22 is issued as an error label. By the time the error label is issued, the inlet 25 of the wireless IC tag 22 conveyed subsequently to the previous wireless IC tag 22 reaches the communication position of the first antenna 12, and individual recognition information to be written to the previous wireless IC tag 22 is written in a contactless manner.

In this manner, also in the second embodiment, the same effect as that in the first embodiment can be achieved. Furthermore, in the second embodiment, since the label sheet 10 need not be back-fed when a write error of the wireless IC tag 22 is detected, a processing load required for the back-feed can be advantageously reduced, and processing time can be advantageously shortened.

### (Third Embodiment)

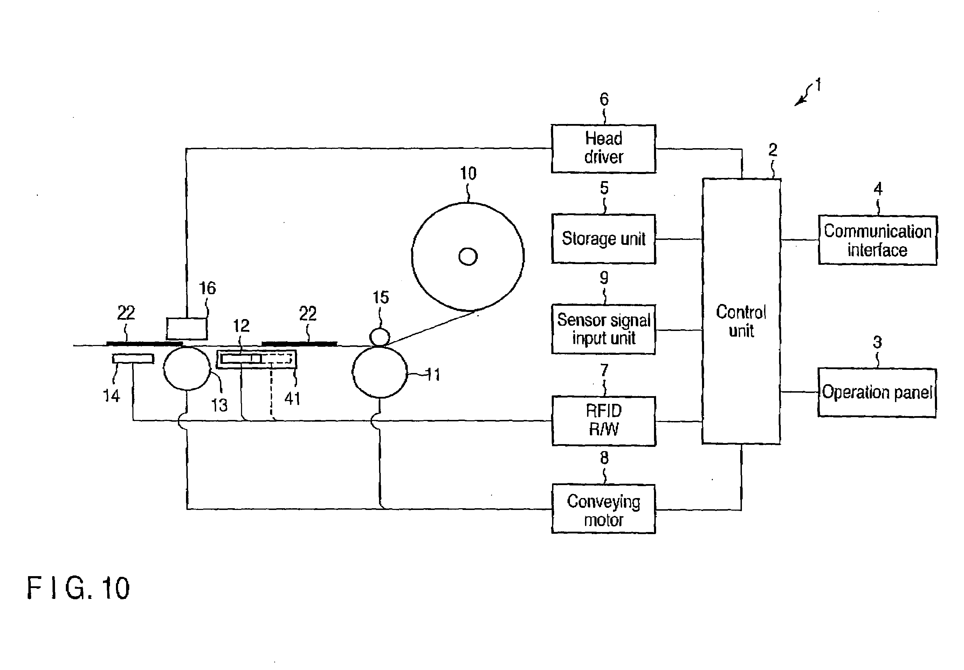

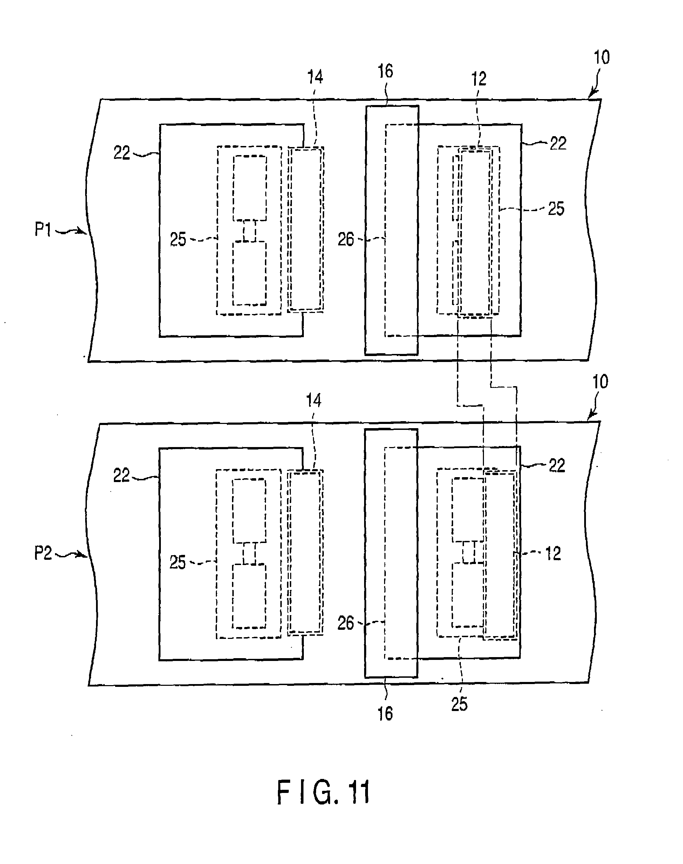

A third embodiment will be described below with reference to FIGS. 10 and 11. The configuration of the wireless IC tag issuing apparatus 1 according to the third embodiment is shown by a schematic diagram in FIG. 10. The same reference numbers as in FIG. 1 of the first embodiment denote the same parts in the second embodiment, and a description thereof will be omitted.

Difference between the third embodiment and the first embodiment includes the following points. That is, position adjusting means 41 to adjust a position of the first antenna 12 is arranged. The position adjusting means 41 slides the first antenna 12 back and forth along a conveying direction of the wireless IC tag 22 conveyed together with the label sheet 10 to adjust the position of the wireless IC tag 22. The other configuration is the same as in the first embodiment. More specifically, the control unit 2 controls issuing of an RFID label by the same procedures as in the first embodiment.

In the present invention, a distance d1 between the first antenna 12 and the second antenna 14 must be smaller than a distance d2 between the inlets 25 of the subsequent wireless IC tags 22 stuck to the label sheet 10 at equal intervals. Therefore, the first antenna 12 and the second antenna 14 are consequently arranged near the print head 16 located between the first antenna 12 and the second antenna 14.

On the other hand, when a write error occurs to the wireless IC tag 22 which performs communication through the second antenna 14, the wireless IC tag issuing apparatus 1 according to the first embodiment drives the conveying means backward to feed back the label sheet 10. The issuing apparatus 1 adjusts the front end of the wireless IC tag 22 in which the write error occurs to the print position of the print head 16. Thereafter, the issuing apparatus 1 drives the conveying means forward to feed the label sheet 10, and an error mark is printed on the print surface of the wireless IC tag by the print head 16.

In this case, as shown in a first pattern P1 in FIG. 11, when the wireless IC tag 22 in which a distance between the front end 26 and the inlet 25 in the conveying direction is long is used, and when the front end 26 is adjusted to the print position of the print head 16 in the issuing apparatus 1, the inlet 25 of the wireless IC tag 22 may reach the communication position of the first antenna 12 or an upstream (holder-side) position of the communication position. In this case, after an error mark is printed on the wireless IC tag 22, or while the error mark is printed, the control unit 2 detects that the inlet 25 of the wireless IC tag 22 is located at the communication position of the first antenna 12, and the same tag data may be written to the wireless IC tag 22 again.

Therefore, when the wireless IC tag 22 of this type is used, a user uses the position adjusting means 41 to shift the position of the first antenna 12 in a direction away from the print head 16. When the position of the first antenna 12 is distanced from the print head 16, as shown in a second pattern P2 in FIG. 11, in the issuing apparatus 1, when the front end of the wireless IC tag 22 is adjusted to the print position of the print head 16, the inlet 25 of the wireless IC tag 22 is located on the downstream side (second antenna 14 side) of the communication position of the first antenna 12. Therefore, the same tag data can be reliably written to the wireless IC tag 22 which is issued subsequently to the wireless IC tag 22 on which an error mark is printed.

The present invention is not directly limited to the embodiments described above. In an execution phase, the present invention can be embodied by modifying the constituent elements without departing from the spirit and scope of the invention.

For example, in each of the embodiments, in order to detect that the wireless IC tag 22 reaches the communication positions of the first antenna 12 and the second antenna 14, a plurality of sensors are arranged along the conveying path of the label sheet 10. However, the first antenna 12 and the second antenna 14 always output carrier waves. When the first antenna 12 and the second antenna 14 receive response waves from the wireless IC tag 22 which receives the carrier waves, the antenna determines that the wireless IC tag 22 reaches the communication position of the corresponding antenna. With this configuration, the wireless IC tag issuing apparatus can reduce the number of sensors.

In the embodiment, a print position by the print head 16 is specified by detecting a front end or a rear end of the wireless IC tag 22. However, a print start position mark is added to a print surface of the wireless IC tag 22 in advance, and the wireless IC tag issuing apparatus may be designed to specify the print position by detecting the mark.

In the embodiment, the mark adding means 31 is located at a position facing the second antenna 14. However, the position of the mark adding means 31 may be set to an arbitrary position on a downstream side of an a position immediately above the second antenna 14 in the conveying direction of the label sheet 10.

The present invention is not limited to the apparatus using the label sheet 10 obtained by sticking a large number of wireless IC tags 22 to the belt-like board 21. For example, card-type wireless IC tags are sequentially conveyed to write tag data, so that the present invention can also be applied to a wireless IC tag issuing apparatus which issues an RFID card.

In addition, various inventions can be formed by arbitrary combinations of the plurality of constituent elements disclosed in the embodiments. For example, several constituent elements may be removed from all the constituent elements described in the embodiments. Furthermore, constituent elements in different embodiments may be combined to each other.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A wireless IC tag issuing apparatus (1), **characterized by** comprising:
conveying means (8) for sequentially conveying a plurality of wireless IC tags (22) each having an inlet (25) including an IC chip (23) and an antenna (24);
a first antenna (12) to perform radio communication with the wireless IC tag (22) conveyed by the conveying means (8);
a second antenna (14) arranged on a downstream side of the first antenna (12) in a conveying direction of the wireless IC tag (22) to perform radio communication with the wireless IC tag (22); and
control means (2) for controlling the conveying means to issue the wireless IC tag (22) after it is checked whether data is normally written to the wireless IC tag (22) on the basis of data written to the wireless IC tag (22) through the first antenna (12) and data read from the wireless IC tag (22) through the second antenna (14),
wherein an interval between the first antenna (12) and the second antenna (14) in a conveying direction of the wireless IC tag (22) is made smaller than a distance between the inlets (25) of the subsequent wireless IC tags (22).

2. The wireless IC tag issuing apparatus according to claim 1, **characterized by** further comprising:
printing means (16) arranged between the first antenna (12) and the second antenna (14) and configured to print visible information on a surface of the wireless IC tag, wherein
when the control means (2) determines that the wireless IC tag (22) from which data is read through the second antenna (14) is an error tag in which data is not normally written, the control means (2) reversely rotates the conveying means (8) to return the wireless IC tag (22) to a print position (16) and print a predetermined error mark

3. The wireless IC tag issuing apparatus according to claim 2, **characterized in that**
the apparatus (1) writes the same data as data written to the wireless IC tag on which the error mark is printed in a wireless IC tag (22) subsequent to the error tag (22).

4. The wireless IC tag issuing apparatus according to claim 2 or 3, **characterized in that**
a position of the first antenna (12) is adjustable back and forth in the conveying direction of the wireless IC tag (22).

5. The wireless IC tag issuing apparatus according to claim 1, **characterized by** further comprising:
mark adding means (31) arranged at the same position as that of the second antenna (14) or on a downstream side in the conveying direction of the wireless IC tag (22) and configured to add a predetermined error mark to a surface of the wireless IC tag (22), wherein
when the control means (2) determines that the wireless IC tag (22) from which data is read through the second antenna (14) is an error tag in which data is not normally written, the control means (2) operates the mark adding means (31) to add a predetermined error mark to the wireless IC tag (22)

6. The wireless IC tag issuing apparatus according to claim 5, **characterized in that**
the apparatus (1) writes the same data as data written to the wireless IC tag (22) to which the error mark is added in a wireless IC tag (22) subsequent to the corresponding wireless IC tag (22) through the first antenna (12).

7. A wireless IC tag issuing method for an apparatus (1) including:
conveying means (8) configured to sequentially convey a plurality of wireless IC tags (22) each having an inlet (25) including an IC chip (23) and an antenna (24);
a first antenna (12) to perform radio communication with the wireless IC tag (22) conveyed by the conveying means (8); and
a second antenna (14) arranged on a downstream side of the first antenna (12) in a conveying direction of the wireless IC tag (22) to perform radio communication with the wireless IC tag (22),
**characterized in that**
when an interval between the first antenna (12) and the second antenna (14) in a conveying direction of the wireless IC tag (22) is made smaller than a distance between the inlets (25) of the subsequent wireless IC tags (22), data is written to the wireless IC tag (22) through the first antenna (12),
the data is read from the wireless IC tag (22) through the second antenna (14), and
after it is checked whether data is normally written to the wireless IC tag (22) on the basis of the data written to the wireless IC tag (22) through the first antenna (12) and data read from the wireless IC tag (22) through the second antenna (14), the wireless IC tag (22) is issued.

8. The wireless IC tag issuing method according to claim 7, the apparatus further including print means (16), **characterized in that**
when it is determined that the wireless IC tag (22) from which data is read through the second antenna (14) is an error tag in which data is not normally written, the conveying means (8) is reversely rotated to return the wireless IC tag (22) to a print position at which the printing means (16) is arranged, a predetermined error mark is printed, and
then the wireless IC tag is issued (22).

9. The wireless IC tag issuing method according to claim 8, **characterized in that**
the same data as data written to the wireless IC tag on which the error mark is printed is written to a wireless IC tag (22) subsequent to the error tag (22) through the first antenna (12).
